(19) **Europäisches Patentamt / European Patent Office / Office européen des brevets**

(11) **EP 3 490 165 A1**

(12) **EUROPEAN PATENT APPLICATION**

(43) Date of publication:
**29.05.2019 Bulletin 2019/22**

(51) Int Cl.:
**H04B 7/155** (2006.01)     **H04W 16/10** (2009.01)
**H04W 52/02** (2009.01)     **H04W 72/08** (2009.01)

(21) Application number: **17203122.1**

(22) Date of filing: **22.11.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nokia Solutions and Networks Oy 02610 Espoo (FI)**

(72) Inventors:
• **Perenda, Erma**
  **Shanghai 201206 (CN)**
• **Gacanin, Haris**
  **2018 Antwerpen (BE)**
• **Atawia, Ramy**
  **2018 Antwerpen (BE)**

(74) Representative: **IP HILLS NV**
**Hubert Frère-Orbanlaan 329**
**9000 Gent (BE)**

(54) **CHANNEL DETERMINATION DEVICE AND METHOD FOR EXTENDED WI-FI NETWORK**

(57) According to an embodiment, the disclosure relates to a network management device for determining an optimal channel for use between a wireless access point, AP, and a range extender, EXT, in a Wi-Fi network, the network management device comprising a processing unit configured to collect for each channel throughput parameters indicative for an achievable throughput when using said channel; and calculate based on the throughput parameters for each channel a first and second coefficient indicative for an achievable throughput with respect to the total of the achievable throughputs of the STAs of the first group; and select for each channel a lowest value from the first and second coefficient as the selected coefficient; and determine a channel having the highest selected coefficient as the optimal channel.

Fig. 2

**Description**

**Technical Field**

The present disclosure generally relates to the determination of a channel that will be used in a wireless network or WLAN, for instance in a Wi-Fi network, for communication between an access point, e.g. a Wi-Fi router, and a range extender.

**Background**

Wi-Fi networks are becoming more complex nowadays. Besides an increasing number of Wi-Fi stations or associated devices, STAs, connected to an access point, AP, the number of APs is increasing as well. Each AP covers an area and the coverages of the different APs may intersect at specific locations. On the other hand, there may be no coverage at other locations such that coverage holes arise.

A Wi-Fi repeater or range extender, EXT, is an effective solution to extend the coverage area of an AP. An EXT takes an existing wireless signal from an AP and rebroadcasts it to create an additional network and corresponding coverage. In this way, STAs may still connect to the AP by the EXT that bridges the signal from the STA to the AP. In this disclosure, the wireless link from the EXT to the AP is further referred to as the back-haul and the wireless link from the EXT to the connecting STAs as the front-haul.

By default, the EXT selects the channel for communication with the AP according to the channel of the serving AP itself. However, a best performing channel at the EXT location doesn't necessarily corresponds to the channel of the AP. Therefore, in recent years the channel selection process for the AP-to-EXT pair in an uncoordinated environment, such as home or outdoor Wi-Fi networks, has been studied intensively.

One way the determine a channel is by minimizing interference among APs as disclosed in "A Channel Selection Strategy for WLAN in Urban Areas by Regression Analysis", by Kajita, S. et al. in IEEE WiMob, October 2014. A similar optimization strategy is disclosed in "Study of algorithms to optimize frequency assignment for autonomous IEEE 802.11 access points" by Finsterbusch, M., et al. in International Journal of Computer Science Issues, Vol. 7, Issue 5, pp. 64-72, 201.

Another method is based on minimizing potential delay or achieving fairness among users of STAs as disclosed in "Self organization of interfering 802.11 wireless access networks" by Kauffmann, B., et al. in INRIA, Tech. Rep., 2005.

The determination of a channel of the AP-to-EXT pair may also be based on maximizing the signal-to-interference ratio at a user level as discussed in "Throughput Validation of an Advanced Channel Assignment Algorithm in IEEE 802.11 WLAN" by Haidar, M. et al. in IEEE International Conference on Communication Software and Networks, pp. 801-806, 2009.

**Summary**

However, due to different locations of a serving AP and connected EXT an optimal channel at the AP's location doesn't necessarily imply that it is optimal at the EXT's location. For example, due to the existence of a possible hidden node, a Quality of Service, QoS, of a STA connected to the EXT may not be optimized due to, for example, a low throughput.

It is an object of the present disclosure to alleviate these problems and to provide a solution for determining a channel for use between an AP and an EXT and for optimizing the communication between them.

This object is achieved, according to a first aspect, by a network management device for determining an optimal channel out of a plurality of channels for use between a wireless access point, AP, and a range extender, EXT, in a Wi-Fi network comprising a first group of stations, STAs, associated to the AP and a second group of STAs associated to the EXT, the network management device comprising a processing unit configured to:

- collect for each channel at the AP, at the EXT and at each STA throughput parameters indicative for an achievable throughput when using said channel; and
- calculate based on the throughput parameters for each channel a first coefficient indicative for an achievable throughput of the AP with respect to the total of the achievable throughputs of the STAs of the first group; and
- calculate based on the throughput parameters for each channel a second coefficient indicative for an achievable throughput of the EXT with respect to the total of the achievable throughputs of the STAs of the second group; and
- select for each channel a lowest value from the first and second coefficient as the selected coefficient; and
- determine a channel having the highest selected coefficient as the optimal channel.

Initially, the AP-to-EXT pair communicates through a randomly selected channel. In order to determine an optimal channel for this pair, the processing unit of the network management device first collects for each channel at the AP, at the EXT and at each STA throughput parameters. These collected throughput parameters are indicative for an achievable throughput when using a particular channel of which the parameters are collected from.

Next, based on the throughput parameters a first coefficient is calculated for each channel. This coefficient is indicative for an achievable throughput of the AP with respect to the total of the achievable throughputs of the STAs of the group of STAs connected to the AP, i.e. the first group. Since the EXT is also connected to the AP at his back-haul, the EXT is in this occurrence considered as a STA of the first group.

Subsequently or simultaneously, a similar calculation is performed for the STAs of the second group, i.e. STAs connected to the EXT. Thus, a second coefficient is calculated for each channel, wherein this second coefficient is indicative for an achievable throughput of the EXT with respect to the total of the achievable throughputs of the STAs of this second group. As a result, for each channel two coefficients are calculated. Then, the processing unit selects for each channel a lowest value of the first and the second coefficient as the selected coefficient. Finally, the channel having the highest selected coefficient is determined and becomes the optimal channel for use for communication between the AP and the EXT.

Since throughput parameters are not solely calculated at the AP's location, but also at the location of the EXT, both locations are taken into account. Furthermore, by calculating coefficients for each channel, they are all considered to become an optimal channel for communication between the AP and the EXT. Finally, by applying a minimum-maximum criterion, the optimal channel is determined in an efficient and unbiased manner thereby optimizing the overall end user throughput.

According to an embodiment, the processing unit is further configured, when calculating a first and/or second coefficient, to weight an achievable throughput of a STA with respect to the total achievable throughputs of the STAs within its respective group, wherein the weighting is based on an importance of said STA within its respective group.

In other words, a STA may be given more weight when calculating a coefficient when this STA is considered to be more important compared to other STAs within his group. The achievable throughput of the STA is thus weighted with respect to the total achievable throughput of the STAs of his group. As a result, the achievable throughput of the STA will have a bigger effect when calculating a coefficient, since it has a higher impact compared to other STAs. This may be an advantage when, for example, a higher throughput is desired for said STA.

According to an embodiment, the EXT is more important within the first group of STAs compared to the other STAs of this group.

In other words, by considering the EXT more important within his group when calculating the first coefficient, this will result in a higher throughput for the EXT. This is beneficial when a considerable amount of STAs are connected to the EXT at his front-haul.

According to an embodiment, the throughput parameters of a STA for a channel are based on a number of transmitted and received bytes.

In this way, the throughput parameters may be collected in an efficient and straightforward way.

According to an embodiment, the first and second coefficient of a channel is calculated based on the number of transmitted and received bytes during a predefined time interval.

In other words, by performing the calculation based on the number of transmitted and received bytes during a predefined time interval, any peak in the collected data is smoothened.

According to an embodiment, the processing unit is further configured to switch a channel used by the AP to communicate with the EXT and the STAs of the first group sequentially on successive predefined time intervals such that throughput parameters are collected for each channel.

For example, every five minutes, a channel used by the AP to communicate with the EXT is switch. This is repeated in a successive manner such that the AP has communicate with the EXT by used of each channel of the plurality of channel. As a result, throughput parameters are collected for each channel. Advantageously, the collection is performed on a real-life situation.

According to an embodiment, the processing unit is further configured to instruct the AP and the EXT to switch to the optimal channel.

Thus, when the processing unit has determined the optimal channel for communication between the AP and the EXT, it instructs them to switch to this optimal channel. Advantageously, the AP and the EXT communicate thus in an optimal way with each other.

According to a second aspect, the disclosure relates to a method for determining an optimal channel out of a plurality of channels for use between a wireless access point, AP, and a range extender, EXT, in a Wi-Fi network comprising a first group of stations, STAs, associated to the AP and a second group of STAs associated to the EXT, the network management device comprising a processing unit configured to:

- collecting for each channel at the AP, at the EXT and at each STA throughput parameters indicative for an achievable throughput when using said channel; and
- calculating based on the throughput parameters for each channel a first coefficient indicative for an achievable throughput of the AP with respect to the total of the achievable throughputs of the STAs of the first group; and

- calculating based on the throughput parameters for each channel a second coefficient indicative for an achievable throughput of the EXT with respect to the total of the achievable throughputs of the STAs of the second group; and
- selecting for each channel a lowest value from the first and second coefficient as the selected coefficient; and
- determining a channel having the highest selected coefficient as the optimal channel.

According to a third aspect, a computer program product is disclosed comprising computer-executable instructions for performing the method according to the second aspect when the program is run on a computer.

According to a fourth aspect, a computer readable storage medium is disclosed comprising the computer program product according to the third aspect.

According to a fifth aspect, a data processing system is disclosed programmed for carrying out the method according to the second aspect.

## Brief Description of the Drawings

Fig. 1 illustrates an environment comprises a plurality of APs and an EXT; and

Fig. 2 illustrates steps performed to determine an optimal channel for the AP-to-EXT pair; and

Fig. 3 illustrates a suitable computing system for performing steps according to embodiments of the disclosure.

## Detailed Description of Embodiment(s)

The present invention relates to the determination of a channel that will be used in a wireless network or WLAN, for instance in a Wi-Fi network, for communication between an access point, e.g. a Wi-Fi router, and a range extender

A Wi-Fi network is a wireless local area network, WLAN, with communication devices communicating based on the IEEE 802.11 standards. The communication devices are further connected to another communication network via a wireless access point, an AP. A range-extender, also referred to as wireless repeater, is a communication device that extends the range of a Wi-Fi network. To achieve this, the range-extender takes an existing signal from the wireless access point and rebroadcasts the signal.

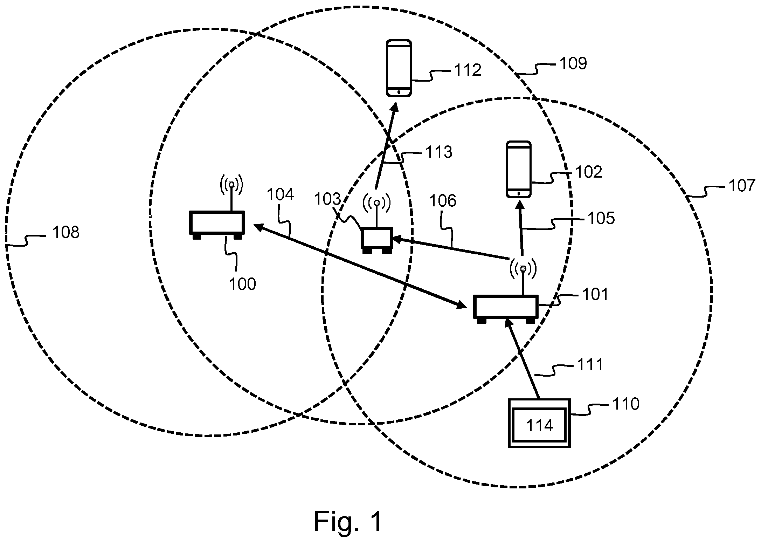

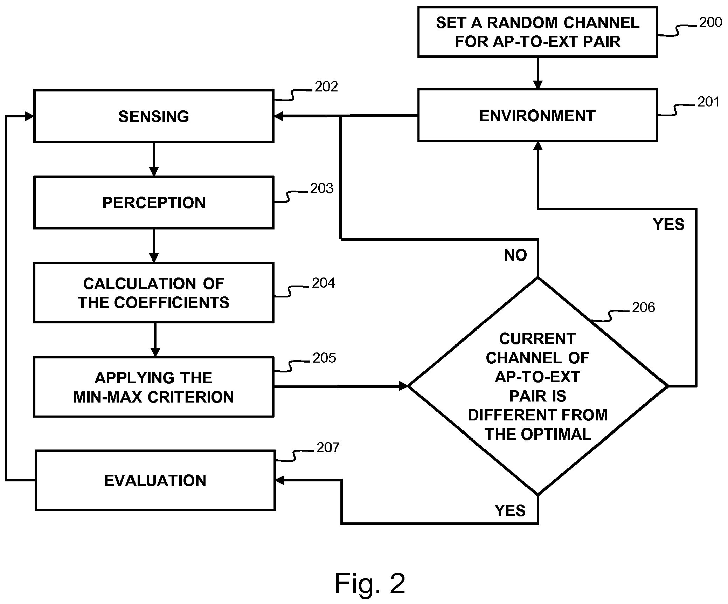

Fig. 1 illustrates an environment comprising a Wi-Fi network and further comprising a first AP 100 and a second AP 101. The environment further comprises an EXT 103 configured to communicate through the wireless link 106 with the AP 101. A STA 102 is connected to the AP 101 through the wireless link 105 and a STA 112 is connected to the EXT 103 through the wireless link 113. Fig. 1 further illustrates coverages of the AP 100, the AP 101 and the EXT 103. The coverage of the AP 100 is illustrated by the area 108, the coverage of AP 101 by area 107 and the coverage of the EXT 103 by area 109. As illustrated b areas 107 and 108, the APs 100 and 101 are out of reach from each other, as also illustrated by distance 104. Fig. 1 also illustrates a network management device 110 comprising a processing unit 114 configured for determining an optimal channel for communication between AP 101 and EXT 103. Fig. 2 illustrates steps performed to determine this optimal channel.

In a first step 200, a random channel is set for the AP 101 to EXT 103 pair. In other words, the communication link 106 between the AP-to-EXT pair is set randomly. This randomly chosen channel identifies the environment 201 of the AP 101, the EXT 103 and the associated devices, like 102 and 112.

Secondly, the processing unit collect data. This step is labelled as the sensing 202 of the environment 201. Sensing 202 means that the processing unit 114 of the network management device 110 is aware of the AP-to-EXT environment by collecting data from the AP 101 and the EXT 103. The AP 101 and the EXT 103 periodically inform the network management device 110 on their current stat, which may include statistics of transmitted and received bytes and/or packets, transmitted and received packet errors, retransmission rates and channel busy, active and transmit time. The statistics may further relate to associated devices, like STA 102 and STA 112, and may further comprise received signal strength indicator, RSSI, levels, transmission and reception modulation and coding scheme, MCS, levels. Additionally, the STAs 102 and 112 may also send data to the network management device 110 including RSSI levels at their respective location and information about their neighbouring APs, like for example AP 100, which may comprise a RSSI level and an operating channel.

Thirdly, the processing unit 114 uses these collected data in the sensing 202 step to perform calculations of coefficients for every available channel at the AP 101 and at the EXT 103. This step is defined as the perception 203 step and subsequently the calculation of the coefficients 203.

A first coefficient may be calculated based on throughputs of each channel $i$ available at the AP 101 and the EXT 's103 backhaul. A first coefficient of channel *i* at the AP 101, labelled as $w_{i,AP}$, is in this occurrence a function of a parameter proportional to the maximum total achievable throughput at the AP 101 when using said channel *i* and labelled as $R_{i,AP}$, and a parameter proportional to the achievable throughput of a kth STA when using channel *i* and labelled as $R_{i,STA_k}$. In other words, $w_{i,AP} = f(R_{i,AP}, R_{i,STA_k})$.

The parameters $R_{i,AP}$ and $R_{i,STA_k}$ may be determined, according to a first method, by scanning the environment of the AP 101. The AP 101 scans the neighbouring APs, such as 100, to detect their operating channel, their RSSI level and the total busy time fraction for each channel. The busy time fraction is defined in the standards *IEEE Std 802.11-2012, Wireless LAN Medium Access Control (MAC) and Physical Layer (PHY) Specifications, IEEE, 2012* and used to calculate a channel utilization factor. A low busy time fraction indicates less contention on a channel and thus a higher throughput for an end-user of a STA. Additionally, the AP 101 uses Modulation and Coding Schemes, MCS, of its STAs, for example 102, to estimate the total throughput. The parameters $R_{i,STA_k}$ then denotes the maximum MCS that is achievable by STA *k* when using channel *i*, in other words a maximum theoretical throughput expressed in *Mbps*. This parameter may be exported from an initial scan done by a user before associating to AP 101. Additionally, the parameter $R_{i,AP}$ denotes a channel utilization of channel *i* with values in the range of [0,1] given as $R_{i,AP} = \left\lfloor \dfrac{Bi}{dot11ChannelUtilizationBeaconIntervals \times dot11BeaconPeriod \times 1024} \times 255 \right\rfloor$, wherein Bi denotes the total busy time fraction for channel *i*.

The first coefficient for channel *i* can then be formulated as

$$w_{i,AP} = f\left(R_{i,AP}, R_{STA_{k,i}}\right) = \left(1 - R_{i,AP}\right) \times \sum_{k=0}^{K} c_k R_{STA_{k,i}}$$

where *K* is the number of STAs associated to the AP 101, $c_k$ is the importance of the kth STA.

A way to calculate the value of $c_k$ based on the EXT's 103 load is as follows:

$$c_k = \begin{cases} 1 & if\ k\ is\ a\ user\ device \\ N & if\ k\ is\ an\ extender \end{cases}$$

wherein *N* is the number of associated STAs to the EXT 103. The network management device 110 may distinguish between the EXT 103 and a STA 102 by use of their physical addresses.

Another method to determine coefficients is based on the actual throughput by the STAs using the total number of transmitted and received bytes. The network management device 110 may change the channel at the AP 101 each predefined time interval, for example every five minutes, to collect the throughput of the AP's users, such a STA 102, and the EXT's 103 backhaul. This method may be preferred if the users of the AP 101 are not using real-time services, since switching a channel causes a temporal interruption.

In this method, the parameter $R_{i,AP}$ may be set at zero, thus $R_{i,AP} = 0$, and the parameter $R_{i,STA_k}$ becomes:

$$R_{i,STA_k} = \frac{\left(B_{k,i}^U + B_{k,i}^D\right)}{\delta_t}$$

wherein $B_{k,i}^U$ and $B_{k,i}^D$ are the total transmitted and receives bytes by STA k on channel *i*. $\delta_t$ is the time interval spent on each channel, for example five minutes.

A second coefficient for each channel *i* is calculated as well, in this case at the EXT's 103 front-haul. The second coefficient is thus related to the EXT's 103 front-haul throughput and is formulates as:

$$w_{i,EXT} = f\left(R_{i,EXT}, R_{STA_{m,i}}\right)$$

where $R_{i,EXT}$ is proportional to the maximum achievable front-haul throughput at the EXT 103 for channel $i$. Following a same reasoning as for the AP 102, the general expression for the second coefficient when applying the first method is:

$$w_{i,EXT} = f\left(R_{i,EXT}, R_{STA_{m,i}}\right) = \left(1 - R_{i,EXT}\right) \times \sum_{m=0}^{M} c_m R_{STA_{m,i}}$$

wherein M is the number of STAs associated to the EXT 103, such as STA 112, and $c_m$ is the normalized importance of the m^th STA.

In the next step 205, a minimum-maximum criterion is applied. First, the processing unit 114 calculates a selected coefficient for each channel $i$ as $w_i$ and calculated as:

$$w_i = min\left(w_{i,AP}, w_{i,EXT}\right).$$

Finally, the processing unit 114 selects the channel having the maximum selected coefficient, denoted as $i^* = argmax\{w_i\}$. If the current channel of the AP-to-EXT pair is different from this selected channel, the processing unit 114 switches 206 it to this new optimal channel.

Afterwards, the processing unit 114 may evaluate 207 if a throughput is optimal after the switching of the channel and if, for example, a lower throughput is observed, the steps 201-206 may be repeated.

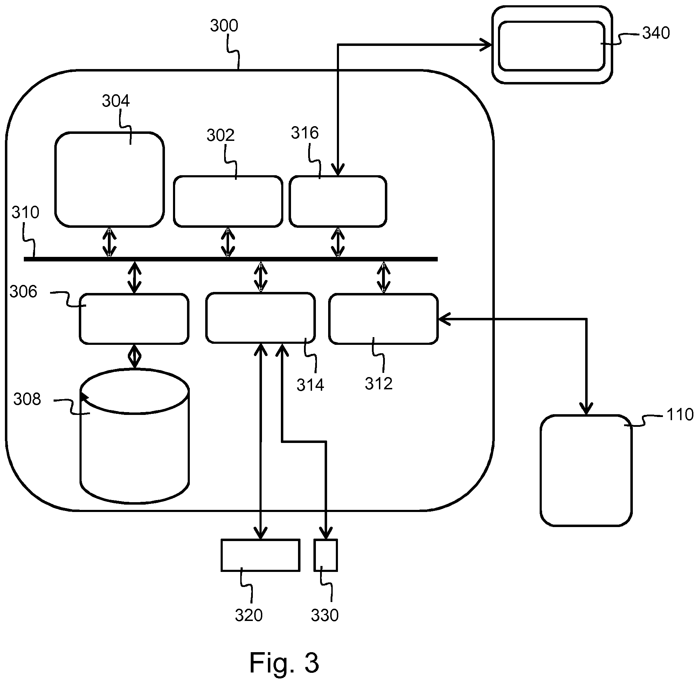

Fig. 3 shows the network management device 110 according to an embodiment of the invention. Network management device 110 is suitable for performing the steps according to the above embodiments. Network management device 110 may also be incorporated in or used as access point 100-101 or range extender 103. Network management device 110 may in general be formed as a suitable general purpose computer and comprise a bus 310, a processor 302, a local memory 304, one or more optional input interfaces 314, one or more optional output interfaces 316, a communication interface 312, a storage element interface 306 and one or more storage elements 308. Bus 310 may comprise one or more conductors that permit communication among the components of the network management device 110. Processor 302 may include any type of conventional processor or microprocessor that interprets and executes programming instructions. Local memory 304 may include a random access memory (RAM) or another type of dynamic storage device that stores information and instructions for execution by processor 302 and/or a read only memory (ROM) or another type of static storage device that stores static information and instructions for use by processor 302. Input interface 314 may comprise one or more conventional mechanisms that permit an operator to input information to the network management device 110, such as a keyboard 320, a mouse 330, a pen, voice recognition and/or biometric mechanisms, etc. Output interface 316 may comprise one or more conventional mechanisms that output information to the operator, such as a display 340, etc. Communication interface 312 may comprise any transceiver-like mechanism such as for example one or more Ethernet interfaces that enables network management device 110 to communicate with other devices and/or systems, for example with access point 100 or 102. The communication interface 312 of network management device 110 may be connected to such another network management device by means of a local area network (LAN) or a wide area network (WAN) such as for example the internet. Storage element interface 306 may comprise a storage interface such as for example a Serial Advanced Technology Attachment (SATA) interface or a Small Computer System Interface (SCSI) for connecting bus 310 to one or more storage elements 308, such as one or more local disks, for example SATA disk drives, and control the reading and writing of data to and/or from these storage elements 308. Although the storage elements 308 above is described as a local disk, in general any other suitable computer-readable media such as a removable magnetic disk, optical storage media such as a CD or DVD, -ROM disk, solid state drives, flash memory cards, ... could be used. The network management device 110 described above can also run as a virtual machine above the physical hardware.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A network management (110) device for determining an optimal channel out of a plurality of channels for use between a wireless access point (101), AP, and a range extender (103), EXT, in a Wi-Fi network comprising a first group of stations (102), STAs, associated to the AP (101) and a second group of STAs (112) associated to the EXT (103), the network management device comprising a processing unit (114) configured to:

   - collect for each channel at the AP (101), at the EXT (103) and at each STA (102, 112) throughput parameters indicative for an achievable throughput when using said channel; and
   - calculate based on the throughput parameters for each channel a first coefficient indicative for an achievable throughput of the AP (101) with respect to the total of the achievable throughputs of the STAs (102) of the first group; and
   - calculate based on the throughput parameters for each channel a second coefficient indicative for an achievable throughput of the EXT (103) with respect to the total of the achievable throughputs of the STAs (112) of the second group; and
   - select for each channel a lowest value from the first and second coefficient as the selected coefficient; and
   - determine a channel having the highest selected coefficient as the optimal channel.

2. The network management device (110) according to claim 1, wherein, when calculating a first and/or second coefficient, an achievable throughput of a STA (102 112)) is weighted with respect to the total achievable throughputs of the STAs (102, 112) within its respective group, the weighting based on an importance of said STA within its respective group.

3. The network management device (110) according to claim 2, wherein an EXT (103) is more important within the first group of STAs (102).

4. The network management device (110) according to claim 1, wherein throughput parameters of a STA (102, 103, 112) for a channel are based on a number of transmitted and received bytes.

5. The network management device (110) according to claim 4, wherein the first and second coefficient of a channel is calculated based on the number of transmitted and received bytes during a predefined time interval.

6. The network management device (110) according to claim 5, wherein the processing unit (114) is further configured to switch a channel used by the AP (101) to communicate with the EXT (103) and the STAs (102) of the first group sequentially on successive predefined time intervals such that throughput parameters are collected for each channel.

7. The network management device (110) according to claim 3 of claim 6, wherein the processing unit (114) is further configured to instruct the AP (101) and the EXT (103) to switch to the optimal channel.

8. A method for determining an optimal channel out of a plurality of channels for use between a wireless access point (101), AP, and a range extender (103), EXT, in a Wi-Fi network comprising a first group of stations, STAs, associated to the AP and a second group of STAs associated to the EXT, the network management device comprising a processing unit configured to:

   - collecting for each channel at the AP (101), at the EXT (103) and at each STA throughput parameters indicative for an achievable throughput when using said channel; and
   - calculating based on the throughput parameters for each channel a first coefficient indicative for an achievable throughput of the AP (101) with respect to the total of the achievable throughputs of the STAs of the first group; and
   - calculating based on the throughput parameters for each channel a second coefficient indicative for an achievable throughput of the EXT (103) with respect to the total of the achievable throughputs of the STAs of the second group; and

- selecting for each channel a lowest value from the first and second coefficient as the selected coefficient; and
- determining a channel having the highest selected coefficient as the optimal channel.

9. A computer program product comprising computer-executable instructions for performing the method according to claim 8 when the program is run on a computer.

10. A computer readable storage medium comprising the computer program product according to claim 9.

11. A data processing system programmed for carrying out the method according to claim 8.

Fig. 1

Fig. 2

Fig. 3

Europäisches
Patentamt

European
Patent Office

Office européen
des brevets

# EUROPEAN SEARCH REPORT

Application Number

EP 17 20 3122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/215950 A1 (AMINI PEIMAN [US] ET AL) 30 July 2015 (2015-07-30) * paragraphs [0028], [0028], [0031], [0039], [0061], [0065], [0067], [0069], [0071] * * figures 11,13 * ----- | 1-11 | INV. H04B7/155 H04W16/10 H04W52/02 H04W72/08 |
| A | US 2016/219591 A1 (LEE JAE SEUNG [KR] ET AL) 28 July 2016 (2016-07-28) * the whole document * ----- | 1-11 | |
| | | | TECHNICAL FIELDS SEARCHED (IPC) H04B H04W |

| The present search report has been drawn up for all claims | | |
|---|---|---|
| Place of search | Date of completion of the search | Examiner |
| Munich | 15 May 2018 | Murcia Martinez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 20 3122

15-05-2018

| Patent document cited in search report | | Publication date | Patent family member(s) | | Publication date |
|---|---|---|---|---|---|
| US 2015215950 | A1 | 30-07-2015 | CN<br>US<br>US | 104812014 A<br>2015215950 A1<br>2017367102 A1 | 29-07-2015<br>30-07-2015<br>21-12-2017 |
| US 2016219591 | A1 | 28-07-2016 | KR<br>US | 20150029582 A<br>2016219591 A1 | 18-03-2015<br>28-07-2016 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAJITA, S. et al.** A Channel Selection Strategy for WLAN in Urban Areas by Regression Analysis. *IEEE WiMob,* October 2014
- **FINSTERBUSCH, M. et al.** Study of algorithms to optimize frequency assignment for autonomous IEEE 802.11 access points. *International Journal of Computer Science Issues,* vol. 7 (5), 64-72

- **KAUFFMANN, B. et al.** Self organization of interfering 802.11 wireless access networks. *INRIA, Tech. Rep.,* 2005
- **HAIDAR, M. et al.** Throughput Validation of an Advanced Channel Assignment Algorithm in IEEE 802.11 WLAN. *IEEE International Conference on Communication Software and Networks,* 2009, 801-806